# EUROPEAN PATENT APPLICATION

(11) **EP 4 648 219 A1**
(43) Date of publication of application: **12.11.2025**
(21) Application number: 25168848.7
(22) Date of filing: 07.04.2025
(51) Int. Cl.: H01Q 1/12, H01Q 1/32, H01Q 1/38, H01Q 9/42, H01Q 21/08

(54) **INTEGRATED TELEMATICS UNIT ANTENNAS FOR VEHICLES**

(30) Priority: 08.05.2024 US 202418658900
(71) Applicant: Harman International Industries, Incorporated, Stamford, CT 06901 (US)
(72) Inventor: Khan, Nasserullah, Novi, MI, 48377 (US); Hadimani, Narendranath, Wixom, MI, 48393 (US); Liu, Hao, Fremont, CA, 94539 (US)
(74) Representative: Kraus & Lederer PartGmbB

(57) **Abstract**

Antenna systems for vehicles with glass roofs are disclosed. In one example, an antenna system may comprise a rigid printed circuit board (514) coupled to a metal surface (306); and a flexible printed circuit board (318) coupled to the rigid printed circuit board (514) and a glass surface (308), wherein the flexible printed circuit board (318) has an antenna trace (310). For example, the rigid printed circuit board (514) may be a part of a vehicle telematics control unit (512) affixed to a metal surface (306) on a roof of the vehicle and the flexible printed circuit board (318) may be coupled to the rigid printed circuit board (514) and affixed to an inner surface of a glass roof (202) of a vehicle.

## Description

### TECHNICAL FIELD

The present description relates generally to vehicle antenna systems.

### BACKGROUND

A telematic control unit (TCU) or telematics unit is a system in a vehicle that can wirelessly connect the vehicle to various network services over various types of networks, such as cellular, Wi-Fi, Bluetooth, etc. Such systems can also control wireless tracking, diagnostics and communication to and from the vehicle, for example. In some examples, a TCU may collect telemetry data from the vehicle, such as position, speed, engine data, connectivity quality, etc., from various sub-systems over data and control busses.

Such TCU systems may use antennas connected to the TCU to collect and communicate signal data. The inventors herein have recognized challenges integrating these TCU systems and antennas in a vehicle. For example, it may be challenging to include them in a vehicle without making them visible or cumbersome or without using lots of costly cable systems connecting various components. For example, OEMs have tried to pack these antennas in the so called "shark fin" on the rear roof of the vehicle, but as the number of antennas used increases, it can become difficult to pack all of them into the shark fin. This may also lead to performance degradation of the antennas in the shark fin, increases in costs of cable systems, and increases in complexity of the TCU system.

### SUMMARY

Embodiments are disclosed for an antenna system having a rigid printed circuit board coupled to a metal surface; and a flexible printed circuit board coupled to the rigid printed circuit board and a glass surface, wherein the flexible printed circuit board has an antenna trace. For example, the rigid printed circuit board may be an antenna matching circuit that is part of a vehicle telematics control unit. In some examples, the antenna matching circuit and/or telematics control unit may be affixed to a metal surface on a roof of the vehicle and the flexible printed circuit board may be coupled to the rigid printed circuit board in the antenna matching circuit or telematics control unit and affixed to an inner surface of a glass roof of a vehicle. In some examples, the metal surface on the roof of the vehicle may abut the glass roof at an interface and the telematics control unit and/or antenna matching circuit may be positioned on the metal surface adjacent to the interface; and the flexible printed circuit board may be positioned on the glass roof adjacent to the interface.

In such an approach, a TCU system may be more easily integrated in a vehicle system. For example, it may be easier to integrate it under a roof of the vehicle. Additionally, since the antenna may comprise a flexible printed circuit board affixed to a glass roof adjacent to the TCU in some examples, the amount of cabling and complexity in the system may be reduced. Further, a thickness of the TCU may be reduced if the TCU is coupled directly to the flexible printed circuit board antenna or if the TCU is located away from the antenna when the antenna is connected to an antenna matching circuit. In some examples, the metal roof may be used to ground the TCU system and/or antenna matching circuits thereby simplifying the TCU and antenna matching circuit design and interface to the antennas. Further, it may be easier to integrate multiple antennas in such an approach without having to include antennas in an external component on the vehicle such as a shark fin, which may reduce manufacturing costs. External components such as shark fins often are sealed off from water penetration to protect the components inside, so not using such external components for antennas may reduce costs associated with water tight sealing for example.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 shows an example inter-vehicle communications system in accordance with the disclosure;
FIG. 2 shows an example vehicle with a glass roof;
FIGS. 3-5 show example antenna systems in accordance with the disclosure.

### DETAILED DESCRIPTION

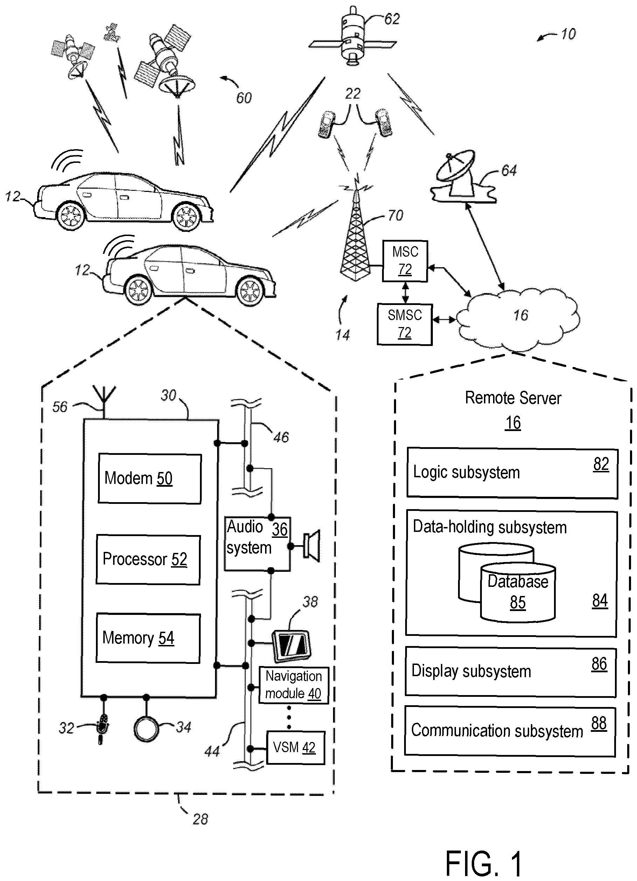

As described above, telematic control unit (TCU) systems in vehicles can wirelessly connect vehicles to various network services over various types of networks. Such systems can also control wireless tracking, diagnostics and communication to and from the vehicle, for example. In some examples, a TCU may collect telemetry data from the vehicle, such as position, speed, engine data, connectivity quality, etc., from various sub-systems over data and control busses. FIG. 1 described below shows an example of such systems.

The inventors herein have recognized challenges integrating these TCU systems and antennas in a vehicle. For example, it may be challenging to include them in a vehicle without making them visible or cumbersome or without using lots of costly cable systems connecting various components. For example, OEMs have tried to pack these antennas in the so called "shark fin" on the rear roof of the vehicle, but as the number of antennas used increases, it can become difficult to pack all of them into the shark fin. This may also lead to performance degradation of the antennas in the shark fin, increases in costs of cable systems, and increases in complexity of the TCU system.

In order to address these issues, antenna systems are disclosed that may comprise a thin film attached to a glass surface. For example, the thin film may be a flexible printed circuit board having an antenna trace. Such an antenna may be attached to a glass surface with adhesive. In some examples, the glass surface may comprise a glass roof, a glass window, or the like on a vehicle. In such an approach, the antenna may be approximately two dimensional since it is so thin, for example the thickness of the antenna may be in a range of about 0.32 mm - 0.42mm, or in a range of about 0.10 mm to 0.60 mm, but other thicknesses are contemplated. Such an antenna may be coupled either directly to a TCU included in a vehicle system or indirectly coupled to a TCU via cabling from antenna matching circuits to the TCU. In some examples, the TCU and/or antenna matching circuits may be coupled to a metal surface, e.g., a metal surface in a vehicle. The TCU and/or antenna matching circuit may be grounded to the metal surface it's attached to, e.g., via metal fasteners or the like.

The antenna may be coupled to the TCU or a rigid printed circuit board in the TCU in a variety of ways. For example, the antenna may be integrated with a rigid printed circuit board in the TCU, or may be directly coupled in a variety of ways so that the TCU and antenna are adjacent to each other. In other examples, the TCU may be positioned a distance away from the antenna coupled to the glass surface and the antenna may be coupled to an antenna matching circuit that is connected to a TCU located elsewhere in the vehicle. For example, since temperatures on vehicle roofs may be high in certain situations, the TCU may be positioned at a location in the vehicle a distance away from the roof. In such an example, the antenna may be coupled to the TCU via suitable cabling or other connections. As another example, the antenna may be coupled to an adjacent antenna matching circuit, which in turn is connected to the TCU via suitable cabling. The antenna systems disclosed herein may be integrated inside the vehicle rather than being provided as a shark fin antenna protruding from the roof of the vehicle. Further, rather than an external mounting position, the antenna assembly may be mounted inside the roof of the vehicle, for example.

In such an approach, a TCU system may be more easily integrated in a vehicle system. For example, it may be easier to integrate it under a roof of the vehicle. Additionally, since the antenna may comprise a flexible printed circuit board affixed to a glass roof adjacent to the TCU in some examples, the amount of cabling and complexity in the system may be reduced. Further, a thickness of the TCU may be reduced if the TCU is coupled directly to the flexible printed circuit board antenna or if the TCU is located away from the antenna when the antenna is connected to an antenna matching circuit. In some examples, the metal roof may be used to ground the TCU system and/or antenna matching circuits thereby simplifying the TCU and antenna matching circuit design and interface to the antennas. Further, it may be easier to integrate multiple antennas in such an approach without having to include antennas in an external component on the vehicle such as a shark fin, which may reduce manufacturing costs. External components such as shark fins often are sealed off from water penetration to protect the components inside, so not using such external components for antennas may reduce costs associated with water tight sealing for example.

In examples where the flexible printed circuit board antenna is directly coupled to the TCU there may not be any coaxial connectors to the TCU, so that the height of the TCU may only be dependent on whatever network connectors are included in the TCU. Further in approaches, where the TCU and/or antenna matching circuit is grounded to a metal surface of a vehicle roof, radio frequency (RF) currents may flow on the metal roof instead of on the TCU or antenna matching circuit printed circuit board, thereby potentially reducing the possibility of electromagnetic interference (EMI) and electromagnetic compatibility (EMC) issues and potentially reducing the need for shielding in the TCU and/or the antenna matching circuit.

Additionally, in such an approach, the antennas may be implemented with printed circuit board etching technology, so that the dimensions can be more accurate. The accuracy can be of the order of a few microns, for example. If the antennas are directly connected on the main printed circuit board in the TCU itself, there may be no need for spring contacts for the antennas, thereby making the system more robust and also reducing assembly steps. Additionally, in such an approach many antennas can be included in the system easily and still maintain good performance. Many vehicles have glass roofs or glass windows positioned at suitable locations for antennas and thus such an approach may be widely applicable to many different types of vehicles.

Turning now to the figures, FIG. 1 shows an example operating environment that comprises an inter-vehicle communications system 10 including one or more telematics-equipped vehicles 12 (i.e., vehicles including TCUs), one or more wireless carrier systems 14, and one or more remote servers 16. In some examples, the inter-vehicle communications system 10 may additionally include various personal wireless devices 22. The following paragraphs simply provide a brief overview of one possible configuration for providing wireless communication between each of the vehicles 12, and between the vehicles 12 and remote servers 16. It should be appreciated that other systems not shown here may include the antenna systems disclosed herein.

Vehicles 12 are depicted in the illustrated embodiment as passenger cars, but it should be appreciated that any other vehicle including motorcycles, trucks, sports utility vehicles (SUVs), recreational vehicles (RVs), marine vessels, aircraft, etc., can also be used. Some of the vehicle electronics 28 are shown generally in FIG. 1. The vehicle electronics 28 may include one or more of a telematics unit or telematic control unit (TCU) 30 (telematics unit and telematics control unit are used interchangeably herein), a microphone 32, one or more pushbuttons or other control inputs 34, an audio system 36, a visual display 38, and a navigation module 40 as well as a number of vehicle system modules (VSMs) 42.

Telematics unit 30 may be an OEM-installed or aftermarket device that enables vehicles 12 to receive and/or transmit wireless signals corresponding to voice, text, and/or other data. Thus, telematics unit 30 may send and/or receive wireless signals (e.g., electromagnetic waves). Telematics unit 30 may therefore be referred to as transceiver 30, since it may be capable of both sending and receiving wireless signals. Wireless signals produced by the telematics unit 30 of vehicles 12 may be sent to and received by one or more of the vehicles 12 and remote servers 16. Thus, each of the vehicles 12 may be in wireless communication with one another for sending and/or receiving information there-between via the telematics unit 30. Further, each of the vehicles 12 may be in wireless communication with the remote servers 16 for sending and/or receiving information therebetween.

As mentioned above, a telematic control unit (TCU) or telematics unit is a system in a vehicle that can wirelessly connect the vehicle to various network services over various types of networks, such as cellular, Wi-Fi, Bluetooth, etc. Such systems can also control wireless tracking, diagnostics and communication to and from the vehicle, for example. In some examples, a TCU may collect telemetry data from the vehicle, such as position, speed, engine data, connectivity quality, etc., from various sub-systems over data and control busses. In some examples, a telematic control unit may comprise: a global navigation satellite system (GNSS) unit, which keeps track of the latitude and longitude values of the vehicle; an external interface for mobile communication such as Global System for Mobile Communications (GSM), General Packet Radio Service (GPRS), Wi-Fi, Worldwide Interoperability for Microwave Access (WiMAX), long-term evolution (LTE) or 5G, which provides the tracked values to a centralized geographical information system (GIS) database server; an electronic processing unit, e.g., a microcontroller, microprocessor, or field programmable gate array (FPGA) which processes the information and acts as an interface to the GPS; a mobile communication unit; memory for saving GPS values in mobile-free zones or to intelligently store information about the vehicle's sensor data; and a battery module.

Wireless communication between the remote servers 16 and the vehicles 12 may be maintained even at greater distances between the remote servers 16 and the vehicles 12 by including relay towers 70. Each of the towers 70 may include sending and receiving antennas for relaying wireless signals between the remote servers 16 and the vehicles 12. However, it should be appreciated that in some examples, relay towers 70 may not be included in the communications system 10, and that the vehicles 12 may be in direct wireless communication with the remote servers 16. Further, if one or more of the vehicles 12 are separated from the remote server 16 by a sufficient distance, and/or terrain (e.g., mountains) blocks the wireless signal from being transmitted there-between, then the one or more vehicles 12 may not be in wireless communication with the remote servers 16.

Additionally, or alternatively, communications system 10 may utilize satellite communications to provide uni-directional or bi-directional communication between one or more of the vehicles 12 and the remote servers 16 by using one or more communication satellites 62 and an uplink transmitting station 64. As such, each of the vehicles 12 may communicate with one or more of remote servers 16, other telematics-equipped vehicles 12, or some other entity or device capable of transmitting and/or receiving wireless signals. Telematics unit 30 may enable the vehicle to offer a number of different services including those related to messaging, navigation, telephony, emergency assistance, diagnostics, infotainment, and so on.

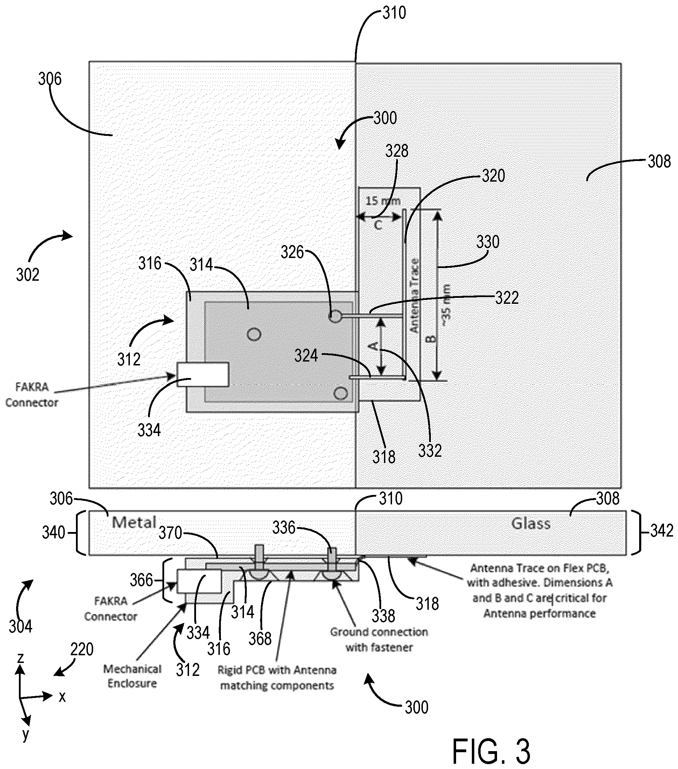

In some examples, telematics unit 30 utilizes a wireless modem 50 for data transmission, an electronic processor 52 (e.g., on a rigid printed circuit board in the telematics unit), one or more digital memory devices 54, and one or more antennas 56, such as the antenna systems described herein and shown in FIGS. 3-5 described below. It should be appreciated that the modem 50 can either be implemented through software or it can be a separate hardware component located internal or external to telematics unit 30. Wireless networking between the vehicles 12 and other networked devices can also be carried out using telematics unit 30. For this purpose, telematics unit 30 can be configured to communicate wirelessly according to one or more wireless protocols.

Processor 52 can be any type of device capable of processing electronic instructions including microprocessors, microcontrollers, host processors, controllers, vehicle communication processors, and application specific integrated circuits (ASICs). It can be a dedicated processor used only for telematics unit 30 or can be shared with other vehicle systems. Processor 52 executes various types of digitally-stored instructions, such as software or firmware programs stored in memory 54, which enable the telematics unit 30 to provide a wide variety of services.

Telematics unit 30 can be used to provide a diverse range of vehicle services that involve wireless communication to and from the vehicles 12. Such services can include: remote control of certain vehicle features through the use of VSMs 42; turn-by-turn directions and other navigation-related services provided in conjunction with the navigation module 40; airbag deployment notification and other emergency or roadside assistance-related services that are provided in connection with one or more collision sensor interface modules such as a body control module (not shown); diagnostic reporting using one or more diagnostic modules; and infotainment-related services where music, webpages, movies, television programs, videogames and/or other information is downloaded by an infotainment module (not shown) and is stored for current or later playback. The above-listed services are by no means an exhaustive list of all of the capabilities of telematics unit 30, but are simply an enumeration of some of the services that the exemplary telematics unit is capable of offering. Furthermore, it should be understood that at least some of the aforementioned modules could be implemented in the form of software instructions saved internal or external to telematics unit 30, they could be hardware components located internal or external to telematics unit 30, or they could be integrated and/or shared with each other or with other systems located throughout the vehicles 12, to cite but a few possibilities. In the event that the modules are implemented as VSMs 42 located external to telematics unit 30, they could utilize communications bus 44 to exchange data and commands with the telematics unit 30.

In some examples, the antennas 56 of the telematics unit 30 may include one or more antennas, wherein at least one of the one or more antennas comprises a flexible printed circuit board as described here and shown in FIGS. 3-5 described below. These thin film antennas may be coupled to antenna matching circuits that are in turn coupled to a main TCU or the thin film antennas may be coupled directly to the TCU, as described below. Navigation module 40 may be configured to support any suitable navigation system. Navigation information can be presented on the display 38 (or other display within the vehicle) or can be presented verbally such as is done when supplying turn-by-turn navigation. The navigation services can be provided using a dedicated in-vehicle navigation module (which can be part of navigation module 40), or some or all navigation services can be done via telematics unit 30, wherein the position information is sent to a remote location for purposes of providing the vehicle with navigation maps, map annotations (points of interest, restaurants, etc.), route calculations, and the like.

Apart from the audio system 36 and navigation module 40, the vehicles 12 can include other vehicle system modules (VSMs) 42 in the form of electronic hardware components that are located throughout the vehicle and typically receive input from one or more sensors and use the sensed input to perform diagnostic, monitoring, control, reporting and/or other functions. Each of the VSMs 42 is preferably connected by communications bus 44 to the other VSMs, as well as to the telematics unit 30, and can be programmed to run vehicle system and subsystem diagnostic tests and perform other functions.

Vehicle electronics 28 may also include a number of vehicle user interfaces that provide vehicle occupants with a means of providing and/or receiving information, such as microphone 32, pushbuttons(s) 34, audio system 36, and visual display 38. The pushbutton(s) 34 may allow manual user input into the telematics unit 30 to provide data, response, or control input. Various other vehicle user interfaces can also be utilized, as the interfaces of FIG. 1 are only an example of one particular implementation.

Remote servers 16 may include a logic subsystem 82 and a data-holding subsystem 84. Logic subsystem 82 may include one or more processors configured to execute software instructions. Such instructions may be implemented to perform a task, implement a data type, transform the state of one or more devices, or otherwise arrive at a desired result. Additionally, or alternatively, the logic subsystem 82 may include one or more hardware or firmware logic machines configured to execute hardware or firmware instructions.

Data-holding subsystem 84 may include one or more physical, non-transitory devices configured to hold data and/or instructions executable by the logic subsystem 82 to implement the herein described methods and processes. When such methods and processes are implemented, the state of data-holding subsystem 84 may be transformed (for example, to hold different data). Remote servers 16 may include one or more databases 85 in data-holding subsystem 84 for storing processed requests for assistance, vehicle location data, and vehicle operator preferences.

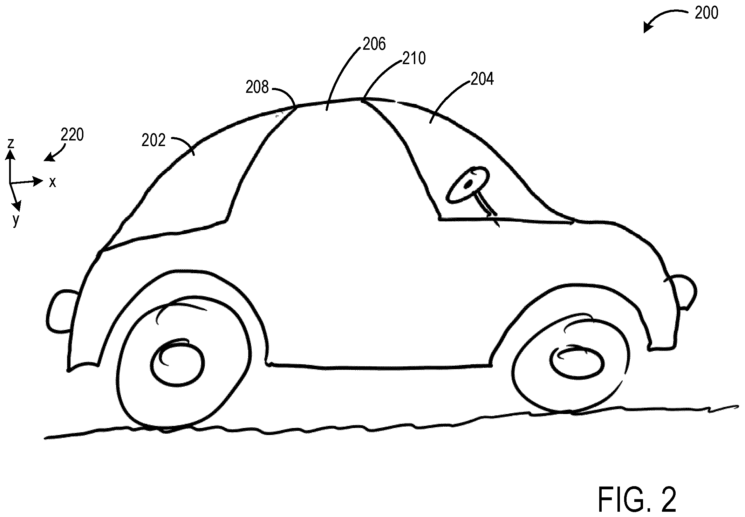

Remote servers 16 may optionally include a display subsystem 86, communication subsystem 88, and/or other components not shown in FIG. 2. For example, remote servers 16 may also optionally include user input devices such as keyboards, mice, game controllers, cameras, microphones, and/or touch screens. When included, display subsystem 86 may be used to present a visual representation of data held by data-holding subsystem 84 via one or more display devices. When included, communication subsystem 88 may be configured to communicatively couple remote servers 16 with one or more other computing devices, such as vehicles 12.

In some examples, the relay towers 70 may be configured as part of a wireless cellular network. In such examples, the communications system 10 may include personal wireless devices 22 which can be, for example, cellular phones or other personal portable devices capable of wireless communication including, for the illustrated embodiment, SMS messaging capability. The devices 22 can communicate with the relay towers 70 to send and receive voice calls, SMS messages, and possibly other communications such as non-speech data for purposes of providing Internet access, weather information, stock information, etc. In general, SMS messages sent to or from the vehicles 12 or wireless mobile devices 22 are received and/or transmitted by the relay towers 70, and pass through one or more mobile switching centers 72 for processing and routing to the remote servers 16. Further, the telematics unit 30 of each of the vehicles 12 may be capable of sending and/or receiving SMS messages, and phone calls via the cellular network provided by the relay towers 70. As such, telematics unit 30 may utilize cellular communication and thus may include a cellular chipset for voice communications such as hands-free calling.

FIG. 2 shows an example vehicle 200 with a glass roof 202 and glass window 204. Though vehicle 200 is illustrated as an automobile, any suitable vehicle having one or more glass roofs, glass windows, or the like are contemplated, including but not limited to motorcycles, trucks, sports utility vehicles (SUVs), recreational vehicles (RVs), marine vessels, aircraft, etc.

Vehicle 200 also includes one or more metal surfaces such as metal roof 206. The glass roofs or glass windows in vehicle 200 may have metal surfaces adjacent to them. For example, metal roof 206 abuts glass window 204 at an interface 210, where the metal roof 206 may be adjacent to or come in contact with glass window 204. Likewise glass roof 202 abuts metal roof 206 at an interface 208.

The thin film antennas described herein and shown in FIGS. 3-5 described below may be affixed to one of the glass windows or glass roofs of vehicle 200 in order to transmit and receive various signals through the glass surfaces of the vehicle. The antennas may be affixed to the glass surfaces in the interior of the vehicle so that no water sealing of the antenna is needed. Multiple antennas can be affixed for various different signal networks, such as cellular, Wi-Fi, or global navigation satellite system (GNSS) signals, for example.

As described herein, vehicle 200 may include a TCU and the antennas affixed to the interior surface of the glass roofs or glass windows may be coupled to the TCU either directly or coupled to an antenna matching circuit that is in turn connected to the TCU via suitable cabling, e.g., coaxial cables. In some examples, a TCU or an antenna matching circuit may be mounted on an interior surface of a metal surface (e.g., metal roof 206), adjacent to an interface with a glass surface where the antenna is attached. For example, one or more antennas may be affixed to the interior surface of glass roof 203 at a position adjacent to interface 208 and a TCU or antenna matching circuit may be mounted to an interior metal surface of metal roof 206 adjacent to interface 208 so that the antennas can be directly coupled to the TCU or antenna matching circuit without cabling. In some examples, the TCU may be positioned at an alternative location a distance away from the roof of vehicle 200. In such an example, the TCU may be coupled to the antenna matching circuits via suitable cabling.

FIG. 2 also shows a set of reference axes 220, including an x-axis, a y-axis, and a z-axis. For example, the z-axis may be a vertical axis and the x- and y-axes may be horizontal axes. Additionally, or alternatively, the z-axis may be approximately parallel with a direction of gravity and the x- and y-axes may be approximately perpendicular to a direction of gravity. Additionally, or alternatively, the z-axis may be a stacking axis along which components are layered perpendicularly as described further below. The reference axes 220 are further shown in FIGS. 3-5 for comparison of orientations of depicted components.

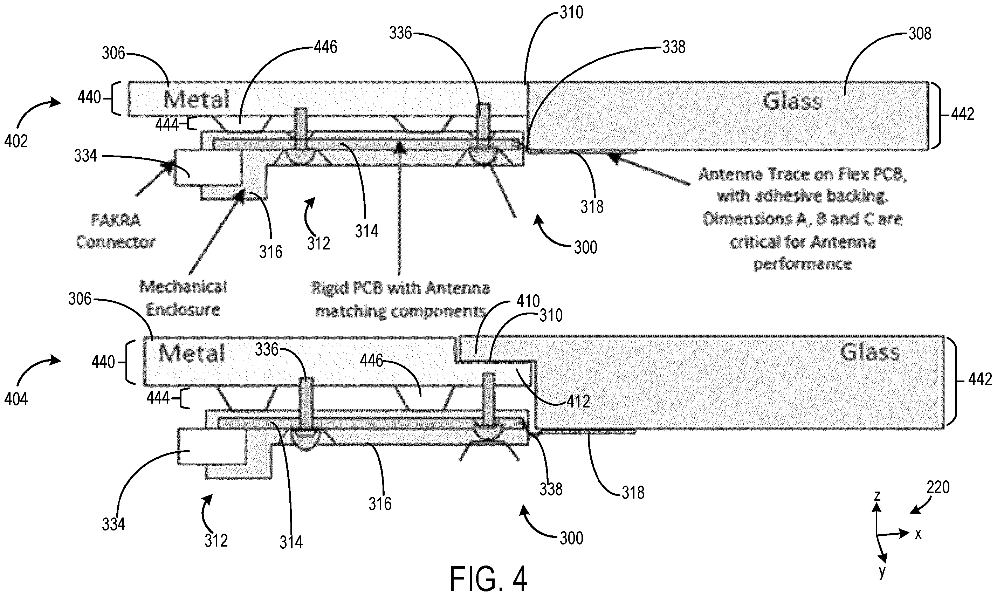

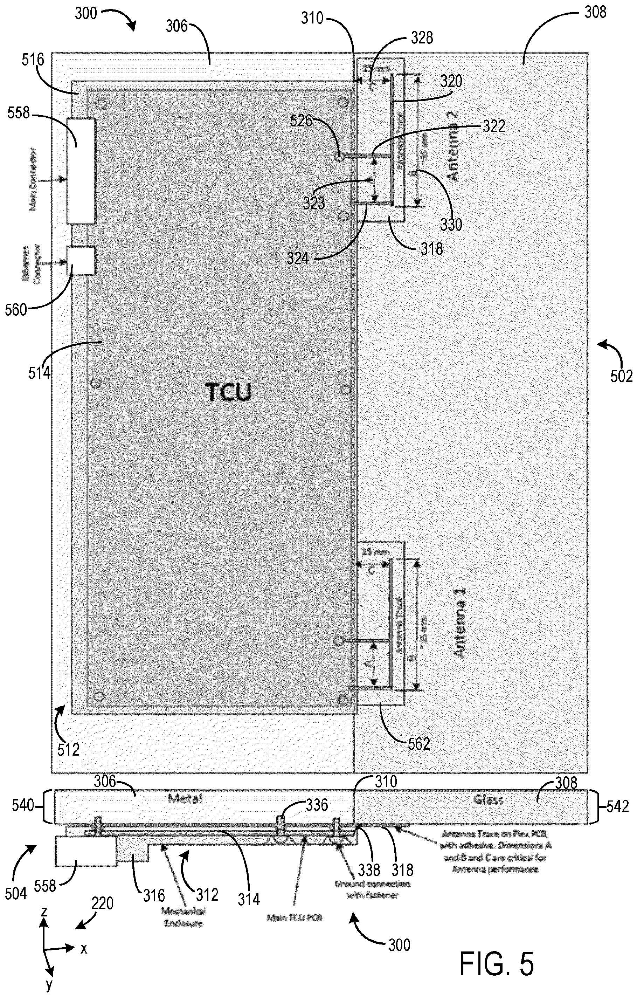

Turning now to FIGS. 3-5, example antenna systems 300 are shown that are positioned around an interface 310 between a metal surface 306 and a glass surface 308, with one or more thin film antennas affixed to the glass surface. FIGS. 3 and 4 show thin film antennas affixed to the glass surface 308 and coupled with an antenna matching circuit 312. Antenna matching circuits may comprise rigid printed circuit boards that have impedance matching capabilities and are passive (i.e., not powered), thus may be simple and relatively small. These antenna matching circuits may be coupled to a main TCU located elsewhere in a vehicle via suitable cabling. FIG. 5 shows an alternative example of thin film antennas coupled directly to a main TCU 512 that may be mounted on a metal surface 306 adjacent to the thin film antennas. Like numbers are used for like elements across FIGS. 3-5. Further in FIGS. 3-5 described below, the dimensions of components may not be shown to scale (however, in some examples, the dimensions shown may be to scale), but alternative relative sizing and positioning may be used, if desired. Antenna systems 300 shown in FIGS. 3-5 may correspond to antennas 56 of the telematics unit 30 in FIG. 1 described above.

FIG. 3 shows a bottom view 302 and a side view 304 of an example antenna system 300 positioned around an interface 310 of a metal surface 306 and a glass surface 308. For example, metal surface 306 may correspond to metal roof 206 shown in FIG.2 and glass surface 308 may correspond to glass window 204 from FIG. 2 so that interface 310 shown in FIG. 3 corresponds to interface 210 shown in FIG. 2. Reference axes 220 introduced in FIG. 2 are also shown in FIGS. 3-5 and applies to side view 304, 402, 404, and 504 in FIGS. 3-5 so that in side views 304, 402, 404, and 504 the antenna system 300 is shown mounted to an interior surface within a vehicle along metal/glass interface 310. Views 302 and view 502 in FIG. 3 & 5 show a bottom view of antenna system 300 mounted under a vehicle roof in the interior of the vehicle. However, it should be understood that antenna system 300 shown in FIGS.3-5 may be located at any suitable metal/glass interface. For example, it could be located on a side, back, bottom, or front of a vehicle where a glass window interfaces with a metal portion of the vehicle or any other suitable location where there is a glass/metal interface. As used herein, the phrase "glass roof" can be taken to mean any opening in a vehicle made of glass at any suitable location in the vehicle. For example, the phrase "glass roof" as used herein can be taken to mean any glass window or glass opening positioned anywhere on or in a vehicle.

Antenna system 300 comprises a rigid printed circuit board 314 coupled to metal surface 306. The rigid printed circuit board 314 may be part of an antenna matching circuit 312 affixed to a metal surface 306 on a roof of the vehicle, such as vehicle 200 shown in FIG. 2. Antenna matching circuit 312 may be part of a telematics unit 30 system described above in the description of FIG. 1. For example, antenna matching circuit 312 may be coupled to a main TCU via coaxial cables or the like. The antenna matching circuit 312 and the rigid printed circuit board 314 may be affixed to metal surface 306 at a location adjacent to glass surface 308 on the glass roof of a vehicle, for example. Metal surface 306 may abut the glass surface 308 at interface 310 and the rigid printed circuit board 314 may be positioned on the metal surface 306 adjacent to the interface 310. For example, an edge of the antenna matching circuit 312 may substantially align with or be positioned along an edge of the interface 310. Additionally, the flexible printed circuit board 318 may be positioned on the glass surface 308 adjacent to the interface 310. For example, the flexible printed circuit board 318 may substantially align with or be positioned along an edge of the interface 310.

The flexible printed circuit board 318 has an antenna trace 320. The antenna trace may be implemented with printed circuit board etching technology so that the dimensions can be accurate, for example. Its construction may involve the utilization of copper or other conductive materials through printing or etching techniques to form the antenna trace on a surface of the flexible printed circuit board 318. The antenna may be fabricated in various different configurations, such as ring-shaped, patch-shaped, and planar inverted-F type, among others. The antenna may be configured to convert the electric current within the rigid printed circuit board 314 into electromagnetic waves, which are subsequently emitted into the surrounding environment and received by other antennas. The antenna may also be configured to convert electromagnetic waves received from the surrounding environment into electric current for processing in the rigid printed circuit board 314. The flexible printed circuit board 318 may be fabricated from flexible materials like polyimide or polyester, thereby enabling bending, twisting, and molding into various shapes and configurations.

The antenna trace 320 may be configured for sending and/or receiving signals on any suitable network. For example, antenna trace 320 may be configured for one or more of cellular, Wi-Fi, Bluetooth, Global Positioning System (GPS), or global navigation satellite system (GNSS) signals. As another example, the antenna trace 320 may be configured for Internet of Things (IoT) and/or wireless sensor networks to enable communication between interconnected devices, allow for data exchange and control in applications like smart homes, industrial automation, and environmental monitoring.

Antenna trace 320 may have branches, such as branch 322 and branch 324 that connect the antenna trace to circuits of printed circuit board 314. For example, branch 322 may be connected to antenna matching component 326 on printed circuit board 314. The flexible printed circuit board 318 may be coupled to the rigid printed circuit board 314 via a coupling 338 in a variety of ways. For example, the flexible printed circuit board 318 may be coupled to the rigid printed circuit board 314 with one or more zero insertion force (ZIF) connectors. As another example the flexible printed circuit board 318 may be a part of or integrated with the rigid printed circuit board 314.

The dimensions and configuration of antenna trace may be selected depending on the type of network signal to be received (e.g., frequency of electromagnetic waves to be received and/or sent by the antenna) as well as the dielectric constant of the glass the antenna is affixed to. For example, glass in vehicle applications may have a dielectric constant in a range of about 3 to 15, for example. Various antenna trace lengths and dimensions can be tuned based on these factors. For example, distance 328 is a distance from antenna trace 320 to an edge of the flexible printed circuit board 318 at interface 310. In some examples, distance 328 may be about 15 mm. Length 330 is a length of antenna trace 320 roughly parallel to an edge of the flexible printed circuit board 318 at interface 310. In some examples, length 330 may be about 35 mm. Distance 332 is a distance between branch 322 and branch 324 of antenna trace 320 and may be selected based on the coupling mechanism between the flexible printed circuit board 318 and the rigid printed circuit board 314.

The flexible printed circuit board 318 may be affixed to glass surface 308 in a variety of ways. In some examples, the flexible printed circuit board 318 may be affixed to glass surface 308 with an adhesive, e.g., temperature stable adhesives such as cyanoacrylates, epoxies, acrylics, silicone, urethane, or other suitable temperature resistance adhesives. In order to increase adhesion, in some examples the flexible printed circuit board 318 may be etched on a surface of the flexible printed circuit board 318 that is affixed to the glass surface 308 with the adhesive. Antenna system 300 may be adapted to be positioned within or underneath a roof of a vehicle without extending vertically from a top of the roof; thus the flexible printed circuit board 318 may be affixed to an inner surface of the glass roof with an adhesive.

The antenna matching circuit 312 and the rigid printed circuit board 314 may be electrically grounded to the metal surface they are attached to, e.g., metal surface 306. For example, the rigid printed circuit board 314 and/or the antenna matching circuit 312 may be grounded to the metal surface 306 via one or more metal fasteners 336, such as metal screws, bolts, clips and the like. The position and/or number of grounding fasteners 336 may depend on a configuration (e.g., shape, size, number of antennas, etc.) of the antenna system 300.

Antenna matching circuit 312 may include various connectors, such as connector 334 shown in FIGS. 3 & 4, coupled to rigid printed circuit board 312. These connectors may comprise suitable connectors for connecting antenna matching circuit to a main TCU located elsewhere in the vehicle. For example, connector 334 may comprise a FAKRA connector (Fachkreis Automobil, a German standard) or the like.

Height 366 of the antenna matching circuit 312 may be determined by the height of the various connectors, such a connector 334, included therein. Other than the area and height of the connectors or devices included on the rigid printed circuit board 314, the rest of the antenna matching circuit 312 height may be determined by the various electrical components included on the printed circuit board 314 included in the antenna matching circuit. The antenna matching circuit may have a mechanical housing or enclosure 316 that enclosed the various components of the antenna matching circuit such as the rigid printed circuit board 314, connector 334 and other components. The mechanical enclosure may be used to protect the internal components of the antenna matching circuit and may be made of any suitable material such as metal, plastics, and/or combinations thereof. In some examples, a top cover 368 of mechanical housing 316 may be made of a plastic material whereas a bottom cover 370 of enclosure 316 made be made of metal to help ground the antenna matching circuit against the metal surface 306 it is coupled to. In some examples, a height 366 of mechanical housing 316 may be less than 10 to 12 mm, however other heights are contemplated.

FIG 4 shows example antenna systems 300 mounted at a glass/metal interface where the thickness of the glass and metal may be different and or the type of interface between the metal and glass is different. In FIG. 3, thickness 340 of metal surface 306 is shown to be substantially the same as thickness 342 of glass surface 308. It may be desirable to have the flexible printed circuit board 318 lie in approximately the same plane as the rigid printed circuit board 314 to reduce bending of the flexible printed circuit board at the coupling 338 where the flexible printed circuit board is coupled to the antenna matching circuit.

FIG 4 shows two different examples, 402 and 404, where the thickness 440 of the metal surface 306 is less than the thickness 442 of the glass surface 308. At 402 the antenna matching circuit 312 is offset a distance 444 from the metal surface 306 via one or more tabs 446 that bring the rigid printed circuit board 314 substantially in line with or approximately in the same plane as the inner surface of glass surface 308 where the flexible printed circuit board 318 is affixed. The tabs 446 may comprise any suitable spacer components, such as metal or plastic protrusions extending from or affixed to metal surface 306. A similar example is shown at 404 where tabs offset the antenna matching circuit from the metal surface to align it with the inside of the glass; however, the example at 404 shows an alternative interface 310 between the metal surface 306 and the glass surface 308. In this example shown at 404 the glass surface has a tab 410 that overlaps a tab 412 extending from the metal surface at the interface 310. It should be understood that these different cross sections of glass and metal surfaces and different interfaces can be accomplished in various ways to bring the rigid printed circuit board 314 approximately in line with the flexible printed circuit board 318 to reduce bending at coupling 338.

In the examples shown in FIGS 3 & 4, the antenna matching circuit 312 may connect to a larger main TCU or other processing device positioned elsewhere in the vehicle and thus may include smaller rigid printed circuit boards with less electronic components included thereon. However, in FIG. 5, the rigid printed circuit board 314 is shown as a larger main TCU 512 that may have more electronic components included thereon. For example, multiple connectors or devices such as connector 560 and connector 558 may be included in TCU 512 shown in FIG. 5 to connect to various other components and devices located elsewhere in a vehicle. For example, connector 560 may be a ethernet connector and connector 558 may be a main connector for connecting other devices in the vehicle to the main TCU 512 shown in FIG. 5.

FIG. 5 also illustrates how multiple antennas could be connected to the TCU 512. For example, flexible printed circuit board 318 and flexible circuit board 562 could be coupled to rigid printed circuit board 514 in TCU 512. Any suitable number of antennas could be included in antenna system 300 in this way.

The TCU 512 includes a rigid printed circuit board 514 that may be electrically grounded to the metal surface they are attached to, e.g., metal surface 306. For example, the rigid printed circuit board 514 may be grounded to the metal surface 306 via one or more metal fasteners 336, such as metal screws, bolts, clips and the like. The position and/or number of grounding fasteners 336 may depend on a configuration (e.g., shape, size, number of antennas, etc.) of the antenna system 300.

TCU 312 may include various connectors or network access devices, such as devices 558 and 560 shown in FIG. 5, coupled to rigid printed circuit board 514. These connectors or devices may comprise network connectors or network access devices mounted on and electrically coupled to the rigid printed circuit board 514. These devices may facilitate connection between a vehicle and external networks and communications systems (e.g., the remote servers 16 of FIG. 1). For example, a network access device coupled to rigid printed circuit board 514 may be a modem such as the modem 50 of FIG. 1. In alternative examples, a network access device coupled to rigid printed circuit board 514 may be any other type of device which allows for wireless connection between the vehicle and external networks. For example device 558 may be a main connector for connecting TCU 512 to other devices in a vehicle and device 560 may comprise an Ethernet connector or the like.

As with the antenna matching circuits, a height of TCU 512 may be determined by the height of the various connectors or devices, such as devices 558 and 560, included therein. Other than the area and height of the connectors or devices included on the rigid printed circuit board 514, the rest of the TCU height may be determined by the various electrical components included on the printed circuit board 514 included in the TCU. The TCU may have a mechanical housing or enclosure 316 that enclosed the various components of the TCU such as the rigid printed circuit board 514, devices 558 and 560 and other components. The mechanical enclosure may be used to protect the internal components of the TCU and may be made of any suitable material such as metal, plastics, and/or combinations thereof. In some examples, a top cover 368 of mechanical housing 316 may be made of a plastic material whereas a bottom cover 370 of enclosure 316 made be made of metal to help ground the TCU against the metal surface 306 it is coupled to. In some examples, a height of mechanical housing 316 may be less than 10 to 12 mm, however other heights are contemplated.

FIGS. 3-5 show example configurations with relative positioning of the various components. Unless otherwise noted, if shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example

The invention will be further described in the following paragraphs. In one aspect, an antenna system is provided that comprises a rigid printed circuit board coupled to a metal surface; and a flexible printed circuit board coupled to the rigid printed circuit board and a glass surface, wherein the flexible printed circuit board has an antenna trace.

In any of the aspects or combinations of the aspects, the metal surface abuts the glass surface at an interface; wherein the rigid printed circuit board is positioned on the metal surface adjacent to the interface; and wherein the flexible printed circuit board is positioned on the glass surface adjacent to the interface. In any of the aspects or combinations of the aspects, the rigid printed circuit board is part of a telematics control unit in a vehicle. In any of the aspects or combinations of the aspects, the antenna system is adapted to be positioned within or underneath a roof of a vehicle without extending vertically from a top of the roof. In any of the aspects or combinations of the aspects, the flexible printed circuit board is coupled to the glass surface with an adhesive. In any of the aspects or combinations of the aspects, the flexible printed circuit board is etched on a surface of the flexible printed circuit board that is affixed to the glass surface with the adhesive. In any of the aspects or combinations of the aspects, the metal surface provides grounding to the rigid printed circuit board. In any of the aspects or combinations of the aspects, the rigid printed circuit board is grounded to the metal surface via one or more metal fasteners. In any of the aspects or combinations of the aspects, the metal surface and glass surface are part of a roof of a vehicle. In any of the aspects or combinations of the aspects, the flexible printed circuit board is coupled to the rigid printed circuit board with one or more zero insertion force (ZIF) connectors. In any of the aspects or combinations of the aspects, the antenna trace is configured for one or more of cellular, Wi-Fi, or global navigation satellite system (GNSS) signals.

In another aspect, an antenna system for a vehicle is provided that comprises a telematics control unit affixed to a metal surface on a roof of the vehicle; wherein the telematics control unit comprises a rigid printed circuit board; a flexible printed circuit board having an antenna trace etched thereon; wherein the flexible printed circuit board is coupled to the rigid printed circuit board and the flexible printed circuit board is affixed to a glass surface of the vehicle.

In any of the aspects or combinations of the aspects, the metal surface abuts the glass surface at an interface; wherein the telematics control unit is positioned on the metal surface adjacent to the interface; and wherein the flexible printed circuit board is positioned on the glass surface adjacent to the interface. In any of the aspects or combinations of the aspects, the flexible printed circuit board affixed to the glass surface of the vehicle with an adhesive and is etched on a surface of the flexible printed circuit board that is affixed to the glass surface with the adhesive. In any of the aspects or combinations of the aspects, wherein the telematics control unit is grounded to the metal surface via one or more metal fasteners. In any of the aspects or combinations of the aspects, wherein the antenna trace is configured for one or more of cellular, Wi-Fi, or global navigation satellite system (GNSS) signals.

In another aspect, an antenna system for a vehicle with a glass roof is provided that comprises a telematics control unit comprising a rigid printed circuit board, the telematics control unit affixed to a metal surface adjacent to the glass roof; a flexible printed circuit board having an antenna trace etched thereon; wherein the flexible printed circuit board is coupled to the rigid printed circuit board and the flexible printed circuit board is affixed to an inner surface of the glass roof with an adhesive. In any of the aspects or combinations of the aspects, the metal surface abuts the glass roof at an interface; wherein telematics control unit is positioned on the metal surface adjacent to the interface; and wherein the flexible printed circuit board is positioned on the glass roof adjacent to the interface. In any of the aspects or combinations of the aspects, the telematics control unit is grounded to the metal surface via one or more metal fasteners. In any of the aspects or combinations of the aspects, the antenna trace is configured for one or more of cellular, Wi-Fi, or global navigation satellite system (GNSS) signals.

The foregoing descriptions are merely example embodiments adopted to illustrate the principles of the present application, and are not used to limit the protection scope of the present application. For those of ordinary skill in the art, various modifications and improvements can be made without departing from the spirit and essence of the present application, and these modifications and improvements are also within the protection scope of the present application.

As used in this application, an element or step recited in the singular and preceded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

## Claims

1. An antenna system (300), comprising:
a rigid printed circuit board (514) coupled to a metal surface (306); and
a flexible printed circuit board (318) coupled to the rigid printed circuit board (514) and a glass surface (308), wherein the flexible printed circuit board (318) has an antenna trace (320).

2. The antenna system of claim 1, wherein the metal surface abuts the glass surface at an interface; wherein the rigid printed circuit board is positioned on the metal surface adjacent to the interface; and wherein the flexible printed circuit board is positioned on the glass surface adjacent to the interface.

3. The antenna system of claim 1 or 2, wherein the rigid printed circuit board is part of a telematics control unit in a vehicle.

4. The antenna system of any preceding claim, wherein the rigid printed circuit board is part of an antenna matching circuit in a vehicle.

5. The antenna system of any preceding claim, wherein the antenna system is adapted to be positioned within or underneath a roof of a vehicle without extending vertically from a top of the roof.

6. The antenna system of any preceding claim, wherein the flexible printed circuit board is coupled to the glass surface with an adhesive. And wherein the flexible printed circuit board is etched on a surface of the flexible printed circuit board that is affixed to the glass surface with the adhesive.

7. The antenna system of any preceding claim, wherein the metal surface provides grounding to the rigid printed circuit board.

8. The antenna system of claim 7, wherein the rigid printed circuit board is grounded to the metal surface via one or more metal fasteners.

9. The antenna system of any preceding claim, wherein the metal surface and glass surface are part of a roof of a vehicle.

10. The antenna system of any preceding claim, wherein the flexible printed circuit board is coupled to the rigid printed circuit board with one or more zero insertion force (ZIF) connectors.

11. The antenna system of any preceding claim, wherein the antenna trace is configured for one or more of cellular, Wi-Fi, or global navigation satellite system (GNSS) signals.

12. An antenna system (300) for a vehicle with a glass roof (202), comprising:
a telematics control unit (512) comprising a rigid printed circuit board (514), the telematics control unit affixed to a metal surface (306) adjacent to the glass roof (202);
a flexible printed circuit board (318) having an antenna trace (320) etched thereon;
wherein the flexible printed circuit board (318) is coupled to the rigid printed circuit board (514) and the flexible printed circuit board (318) is affixed to an inner surface of the glass roof (202) with an adhesive.

13. The antenna system for a vehicle with a glass roof of claim 12, wherein the metal surface abuts the glass roof at an interface; wherein telematics control unit is positioned on the metal surface adjacent to the interface; and wherein the flexible printed circuit board is positioned on the glass roof adjacent to the interface.

14. The antenna system for a vehicle with a glass roof of claim 12, wherein the telematics control unit is grounded to the metal surface via one or more metal fasteners.

15. The antenna system for a vehicle with a glass roof of claim 12, wherein the antenna trace is configured for one or more of cellular, Wi-Fi, or global navigation satellite system (GNSS) signals.
